# EUROPEAN PATENT APPLICATION

(11) **EP 4 679 689 A1**
(43) Date of publication of application: **14.01.2026**
(21) Application number: 24187039.3
(22) Date of filing: 08.07.2024
(51) Int. Cl.: H02M 1/00, H02M 1/14, H02M 3/07, H02M 3/158

(54) **A CIRCUIT INCLUDING A TRANS-INDUCTANCE VOLTAGE REGULATOR**

(71) Applicant: Infineon Technologies Austria AG, 9500 Villach (AT)
(72) Inventor: ZUFFERLI, Kevin, 33034 Fagagna (IT); SAGGINI, Stefano, 33100 Udine (IT); URSINO, Mario, 9500 Villach (AT); RIZZOLATTI, Roberto, 9523 Villach (AT); DEBOY, Gerald Josef, 9061 Klagenfurt (AT)
(74) Representative: Elkington and Fife LLP

(57) **Abstract**

The disclosed technology relates to a circuit incorporating a trans-inductance voltage regulator (TLVR). The TLVR comprises multiple primary windings connected in series, and secondary windings inductively coupled to respective primary windings and connected between respective phase input nodes and a common output node. A second inductor is connected in series with the primary windings, and is inductively coupled to a first inductor. The first inductor is connected between equipotential nodes. That is, the first inductor is connected between two nodes that are provided with substantially the same voltage during steady state operation. Due to the inductive coupling of the TLVR to the primary inductor, when there is a surge of current between the equipotential nodes, the current slope may be managed by control of the TLVR. For example, the first inductor may be placed before a voltage converter-which may result in an improved transient response of the converter.

## Description

### FIELD OF THE INVENTION

The present disclosure generally relates to uses of a trans-inductance voltage regulator (TLVR).

### BACKGROUND OF THE INVENTION

Data centers are pivotal in serving a multitude of companies and currently account for approximately 2-3% of the global electricity consumption. Data center equipment traditionally operates with a 48 VDC input voltage, or alternatively, with a variable input voltage ranging from 40 VDC to 60 VDC. This preference for higher DC voltages offers several advantages, including reduced distribution losses within the server rack and motherboard. Various methods are employed to deliver higher power per rack and per board, often involving the conversion of the input voltage into one or more output voltages.

Recently, a multi-phase trans-inductor voltage regulator (TLVR) has been proposed comprising multiple power converter phases, each incorporating a multi-winding transformer. The first winding of each power converter phase is connected in series, facilitating coupling among the multiple phases. The second winding of each phase contributes to generating a corresponding output voltage that typically powers a load. Typically, the TLVR is used to boost transient response between each phase input of the second winding and the common output.

There is a increasing need for voltage regulators with higher efficiency and power density. Accordingly, there exists a need for a means for improving circuit behavior, in particular for voltage regulators.

### SUMMARY OF THE INVENTION

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to one aspect of the invention, there is provided a circuit. The circuit comprises a first inductor connected between a first equipotential node and a second equipotential node, wherein the first equipotential node and the second equipotential node are provided with a substantially similar voltage. The circuit also includes a multi-phase trans-inductance voltage regulator (TLVR) comprising a second inductor inductively coupled to the first inductor, a plurality of primary windings connected in series with the second inductor, and a plurality of secondary windings. Each one of the plurality of secondary windings is inductively coupled to a respective one of the plurality of primary windings, and each secondary winding is provided between a respective phase input node and a common output node.

In other words, the circuit incorporates a TLVR inductively coupled via a second inductor to a first inductor between equipotential nodes (i.e., nodes having substantially the same voltage during steady state operation). As a result, when there is a surge of current between the equipotential nodes, the current slope may be managed by control of the TLVR. As will be explained herein, the first inductor may be placed before or after a voltage converter, or between voltage converters - which may result in an improved transient response of the connected converter.

According to another aspect of the present disclosure, there is provided a voltage regulator including a converter comprising an input node configured to receive an input voltage, and an output node configured to provide a scaled output voltage. The voltage regulator also includes the circuit as described above, wherein either a first terminal of the first inductor is connected to a voltage regulator input node, and a second terminal of the first inductor is connected to the input node of the converter; or a first terminal of the first inductor is connected to the output node of the converter, and a second terminal of the first inductor is connected to a voltage regulator output node.

According to yet another aspect of the present disclosure, a multi-stage voltage regulator is provided. The multi-stage voltage regulator includes a first stage converter comprising a first stage input node configured to receive an input voltage, and a first stage output node configured to provide a scaled intermediate voltage. The multi-stage voltage regulator also includes a second stage converter comprising a second stage input node connected to the first stage output node and configured to receive the scaled intermediate voltage, and a second stage output node configured to provide a scaled output voltage. The multi-stage voltage regulator further includes the circuit as described above, wherein the first inductor is between the first stage output node and the second stage input node.

According to a further aspect of the present disclosure, there is provided a multi-stage voltage regulator including a first stage converter comprising an unregulated converter and a regulated converter. The unregulated converter comprises an input node configured to receive a first part of an input voltage, and an output node configured to provide a first scaled intermediate voltage. The regulated converter comprises an input node configured to receive a second part of the input voltage, and an output node configured to provide a second scaled intermediate voltage. The output node of the regulated converter is connected to a common node. The multi-stage voltage regulator also includes a first inductor comprising a first terminal connected to the output node of the unregulated converter of the first stage converter, and a second terminal connected to the common node. The multi-stage voltage regulator further includes a second stage converter comprising an input node configured to receive a voltage on the common node, and an output node configured to provide a scaled output voltage. The multi-stage voltage regulator also includes a multi-phase trans-inductance voltage regulator, TLVR, comprising a second inductor inductively coupled to the first inductor, a plurality of primary windings connected in series with the second inductor, a plurality of secondary windings, and a plurality of phase voltage supplies. Each one of the plurality of secondary windings is inductively coupled to a respective one of the plurality of primary windings, and each secondary winding is provided between a respective phase input node and a common output node. The common output node is connected to the output node of the second stage converter. Each phase voltage supply is connected to a respective phase input node and comprises an upper switch connected between the first terminal of the first inductor and the phase input node, and a lower switch connected between the phase input node and a fixed reference potential.

According to a method for controlling operation of the multi-stage voltage regulator, the method includes sensing a voltage on the output node of the second stage converter, controlling the upper switches and the lower switches of the phase voltage supplies of the TLVR based on the sensed voltage, sensing a first current flowing through the common output node of the TLVR, sensing a second current flowing through the output node of the regulated converter of the first stage converter, and controlling the regulated converter of the first stage converter based on the sensed first current and the sensed second current.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other. The invention will now be described by way of example with reference to the accompanying drawings, in which:
FIG. 1 illustrates a simplified depiction of a multi-phase trans-inductance voltage regulator (TLVR) according to aspects of the present disclosure;
FIG. 2 depicts a TLVR with multiple phase voltage supplies connected to respective phase input nodes, according to aspects of the present disclosure;
FIG. 3 shows a circuit diagram of a circuit comprising a TLVR coupled to a first inductor connected between two equipotential nodes, according to aspects of the present disclosure;
FIG. 4 presents a voltage regulator with a TLVR inductively coupled to a first inductor, according to aspects of the present disclosure;
FIG. 5 depicts a voltage regulator with a TLVR inductively coupled to a first inductor, according to further aspects of the present disclosure;
FIG. 6 illustrates a circuit diagram of a multi-stage voltage regulator with a TLVR inductively coupled to a first inductor, according to aspects of the present disclosure;
FIG. 7 shows a circuit diagram of the multi-stage voltage regulator of Fig. 6, with an input and output of the TLVR connected to parts of the multi-stage voltage regulator, according to other aspects of the present disclosure;
FIG. 8 depicts a circuit diagram of a multi-stage voltage regulator with a first stage converter comprising an unregulated converter and a regulated converter, according to aspects of the present disclosure; and
FIG. 9 presents a circuit diagram of a multi-stage voltage regulator with a first stage converter comprising an unregulated converter and a regulated converter, according to aspects of the present disclosure.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates generally to means for improving transient response between two equipotential nodes. That is, when there is a surge of current between the equipotential nodes, it is desirable for the current slope to be managed. To this end, the invention provides for a first inductor to be connected between the equipotential nodes. The first inductor is inductively coupled to a second inductor, which is connected in series with a TLVR loop. That is, there is provided a second inductor in series with a plurality of series connected primary windings. Each of the primary windings are coupled to respective second windings, which are each connected between a phase input node, and a common output node. By controlling the voltage on each phase input node, the current slope during a current surge between the equipotential nodes may be managed. Moreover, during steady state operation (e.g., when there is no voltage drop between the equipotential nodes), the impact of the first inductor is negligible.

In particular embodiments, the first inductor is connected before, after or between voltage converters. That is, the first inductor may be connected between an input node of a voltage regulator and an input node of a voltage converter of the voltage regulator; between an output node of a voltage converter of a voltage regulator and an output node of the voltage regulator; or between an output node of a first voltage converter of a voltage regulator and an input node of a second voltage converter of the voltage regulator. In each of these cases, during a load transient (e.g., due to a change in load connected to the voltage regulator) there is a surge of current through the equipotential nodes. This will affect the first inductor, creating a local current boost. By managing the current slope through the first inductor (by controlling the phase voltages provided to the phase input node of each secondary winding of the TLVR), it is possible to enhance the speed of the transient response of the entire voltage regulator.

More generally, the equipotential nodes are any two nodes that experience substantially the same voltage on average. That is, the two nodes may experience a voltage ripple, but will not have a non-zero voltage between them on average during steady state operation. In contrast, there may be a voltage drop between the two equipotential nodes in transient conditions. For example, the two equipotential nodes may be two nodes of one connection/wire having substantially no resistance, such as the output of one circuit element and the input to another, connected, circuit element.

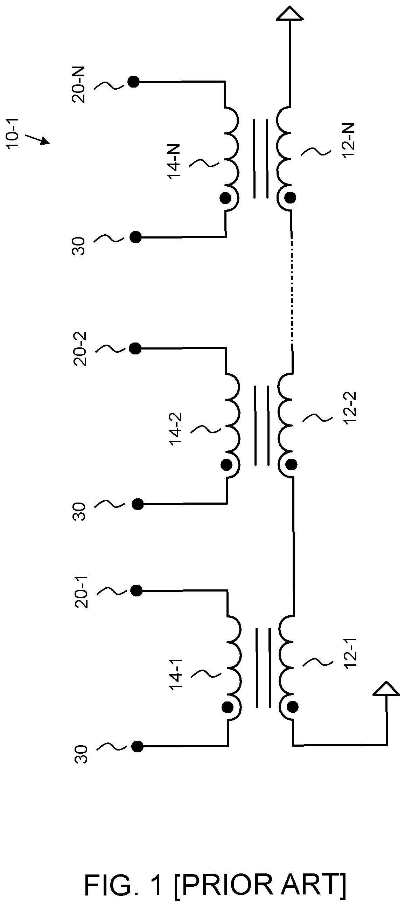

To understand the present disclosure, it is important to understand the operation of a multi-phase trans-inductor voltage regulator (TLVR). Referring to FIG. 1, a circuit diagram of a multi-phase trans-inductance voltage regulator (TLVR) is depicted.

The TLVR 10 comprises a plurality of power converter phases, each having a transformer. That is, the TLVR comprises a plurality of primary windings 12-1... 12-N and respective secondary windings 14-1... 14-N, each primary and secondary winding (i.e., inductor) pair associated with a single power converter phase. Each primary winding 12-1... 12-N is inductively coupled to a respective secondary winding 14-1... 14-N. To be clear, whilst three power converter phases/transformers are presented in Fig. 1, this is meant by way of example only, and the TLVR 10 may comprise as few as two phases, or more than three phases.

Each of the primary windings 12-1... 12-N are connected in series with each other. In some embodiments, the series of primary windings 12-1... 12-N may be collectively referenced to a reference potential, which is typically ground. The series of primary windings 12-1... 12-N may be referred to a TLVR loop.

Each of the secondary windings 12-1... 12-N is provided between a respective phase input node 20-1...20-N (connected to a respective phase input) and a common output node 30. That is, the secondary windings 14-1... 14-N are electrically coupled to a different phase input but are connected to a common output 30.

The coupling between each primary inductor/winding 12-1... 12-N and each respective secondary inductor/winding 14-1... 14-N may have a coupling coefficient close to unity, being near-perfect.

Accordingly, the TLVR 10-1 delivers power from an input voltage supplied in multiple phases, to a common output 30. Rather than using uncoupled individual inductors connected to each phase input (as in traditional voltage regulators), each phase input is input to a secondary winding 14-1... 14-N, which transfers energy across an isolation boundary to the primary windings 12-1... 12-N, which serves to redistribute power between the various phases. In other words, the TLVR 10-1 may allow for efficient power conversion and distribution across multiple phases.

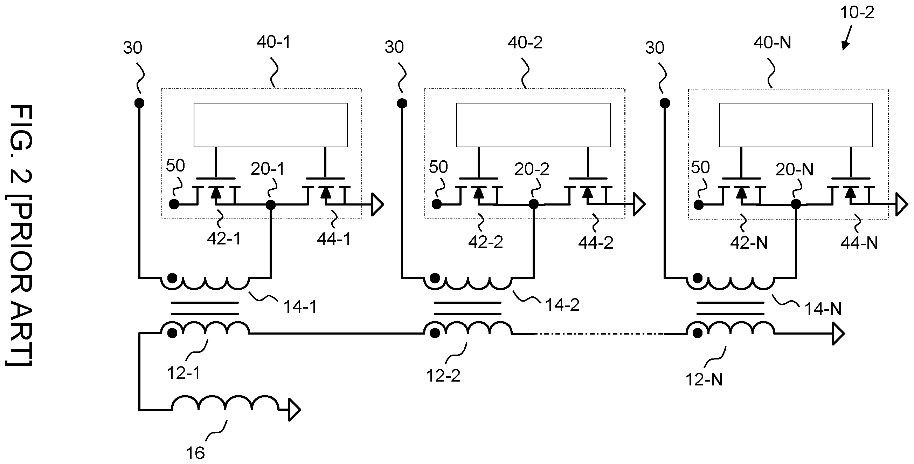

Referring now to FIG. 2, another circuit diagram of a TLVR 10-2 is depicted. The TLVR 10-2 operates in principle similarly to the TLVR 10-1 of Fig. 1. However, as shown, each phase input node 20-1... 20-N is connected to a respective phase voltage supply 40-1... 40-N. That is, the phase voltage supply 40-1... 40-N provides a phase voltage to the phase input node 20-1... 20-N.

More specifically, each phase voltage supply comprises an upper switch 42-1... 42-N and a lower switch 44-1... 44-N. Each upper switch is connected between a common voltage supply node 50 and the phase input nodes, and each lower switch is connected between the phase input nodes 20-1... 20-N and a fixed reference potential (usually ground). Accordingly, each of the secondary windings may be provided with a respective phase voltage via appropriate switching of the upper and lower switches.

To this end, each of the upper switches 42-1... 42-N and the lower switches 44-1... 44-N may be controlled according to a PWM scheme. This may be achieved using control signals generated by a TLVR controller.

Furthermore, the TLVR 10-2 also comprises a transient inductor 16 provided in series with the plurality of primary windings 12-1... 12-N. The transient inductor 16 may be adapted to change the coupling between all the power converter phases. Of course, it will be appreciated that the transient inductor 16 is optional.

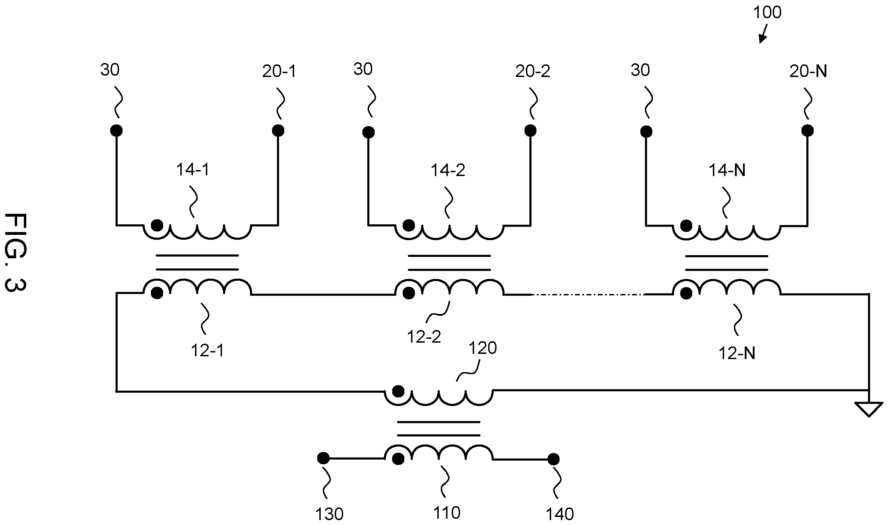

Referring now to FIG. 3, a circuit diagram of a circuit according to an embodiment of the invention is depicted.

As shown, the circuit 100 includes a first inductor 110 connected between a first equipotential node 130 and a second equipotential node 140, both of which are provided with a substantially similar voltage.

The equipotential nodes 130, 140 are any two nodes that experience substantially the same voltage on average. That is, the two nodes may experience a voltage ripple, but will not have a non-zero voltage between them on average during steady state operation. For example, the two equipotential nodes 130, 140 may be two nodes of one connection/wire having substantially no resistance, such as the output of one circuit element and the input to another, connected, circuit element. Thus, the first equipotential node 130 may be connected to a first circuit element/arrangement (e.g., a voltage converter, a filter, an input node, etc.), whilst the second equipotential node may be connected to a second circuit element/arrangement (e.g., a voltage converter, a filter, an output node, etc.).

The equipotential nodes are provided with a substantially similar voltage. That is, the equipotential nodes may be expected to have substantially the same potential on average (accounting for voltage ripple). Thus, the voltage across the first inductor 110 may be expected to be substantially zero during steady state operation of the circuit 100 (neglecting parasitic resistance of the inductor).

The first inductor 110 is inductively coupled/connected to a second inductor 120. The second inductor 120 is connected in series with the plurality of primary windings 12-1... 12-N of the TLVR. That is, the second inductor 120 is connected to the TLVR loop of primary windings 12-1...12-N. The primary windings 12-1... 12-N and the second inductor 120 may be connected in series between a fixed reference potential. In the present case, the primary windings 12-1... 12-N and the second inductor 120 are connected between ground. Nevertheless, they may also be connected together in a floating domain.

Finally, as described in reference to Fig. 1 and Fig. 2, there is provided a plurality of secondary windings 14-1... 14-N. Each one of the plurality of secondary windings 14-1... 14-N is inductively coupled to a respective one of the plurality of primary windings12-1... 12-N, and each secondary winding provided between a respective phase input node 20-2... 20-N and a common output node 30.

Each of the phase input nodes 20-1... 20-N may be provided with a different respective phase input voltage. By controlling each respective phase input voltage during load transient events, an output of the TLVR 10 may be reflected, via the second inductor 120, onto the first inductor 110. By managing specific parameters of operation of the TLVR 10, this configuration can enhance transient response of components connected to the first and second equipotential nodes 130, 140.

Reference now will be made to a variety of voltage regulator power supplies, to which the above described circuit may be applied. Generally, providing the first inductor between equipotential nodes of a voltage regulator enables an improved (e.g., faster) transient response, and thus improved performance of the entire voltage regulator power supply.

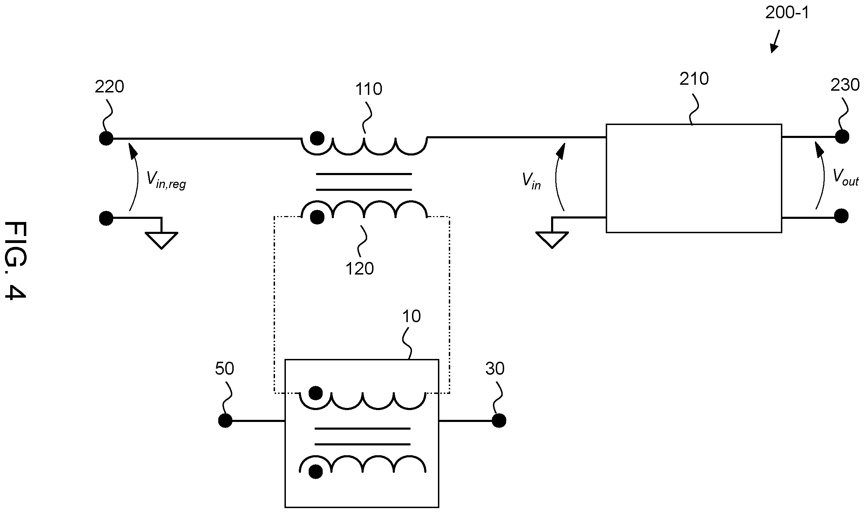

Fig. 4 presents a diagram of a voltage regulator 200-1 incorporating the circuit 100 according to aspects of the present disclosure. The TLVR 10 of the circuit 100 is depicted in simplified form for ease of understanding, with the TLVR loop depicted by the dotted line connected to second inductor 120.

The voltage regulator 200-1 includes a converter 210 comprising an input node configured to receive an input voltage Vin, and an output node 230 configured to provide a scaled output voltage Vout.

The converter 210 may be any type of converter suitable for receiving an input voltage, scaling the input voltage, and outputting a scaled output voltage. To this end, the converter 210 may be regulated converter, being a converter that receives an input voltage having a magnitude in a certain range and output a scaled voltage at a substantially fixed value. In other words, the ratio between the magnitude of the scaled intermediate voltage output by the regulated converter and the magnitude of the input voltage to the regulated converter is controllable. Regulated converters can regulate the output voltage to a specific value but have low efficiency and low power density.

In other cases, the converter 210 may be an unregulated converter 210, being a converter that receives an input voltage and outputs a scaled voltage, with a ratio between the magnitude of the input voltage and the scaled output voltage being substantially fixed. Unregulated converters convert the output voltage with a fixed ratio and have high efficiency and high-power density. Furthermore, combinations of these converter types may form the converter 210 depicted in Fig. 4.

A first terminal of the first inductor 110 is connected to a voltage regulator input node 220, and a second terminal of the first inductor 110 is connected to the input node of the converter 210. Accordingly, in this case, the equipotential nodes are the voltage regulator input node 220 and the input node of the converter 210.

To be clear, the depicted TLVR 10 may be any TLVR as described in reference to Fig. 1 and Fig. 2. In the present case, there are also shown connections for the common voltage supply node 50, and common output node 30. In some embodiments, which will be described in more detail below, the common voltage supply node may be connected to the voltage regulator input node 220, and/or the common output node may be connected to the voltage regulator output node 230.

Nevertheless, embodiments are not restricted hereto. That is, the common voltage supply node 50 may be connected to the input or output of any node of the voltage regulators described below, or may be connected to an external circuit. Equally, the common output node 30 may also be connected to the input or output of any node of the voltage regulators described below, or may be connected to an external circuit.

As a result of the first inductor 110 electrically coupled between the voltage regulator input node 220, and the input node of the converter 210, when there is a load transient (e.g., a change in a load connected to the voltage regulator output node), that results in a positive (or negative) surge of current occurs, it will affect the first inductor 110, creating a local positive or negative current boost. By managing the current slope through the TLVR 10, it is possible to enhance the speed of the transient response of the entire voltage regulator 200-1. Thus, the performance of the voltage regulator power supply 200-1 may be improved.

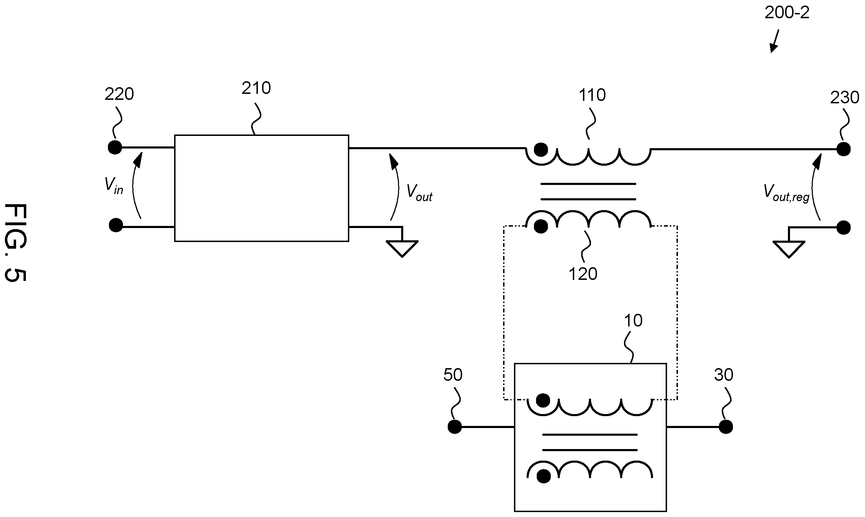

Fig. 5 presents a diagram of a voltage regulator 200-2 incorporating the circuit 100 according to aspects of the present disclosure. Similarly to the diagram in Fig. 4, the TLVR 10 of the circuit 100 is depicted in simplified form for ease of understanding, with the TLVR loop depicted by the dotted line connected to second inductor 120.

The voltage regulator 200-2 of Fig. 5 is similar to the voltage regulator 200-1 of Fig. 4. For example, the voltage regulator 200-2 includes a converter 210 comprising an input node configured to receive an input voltage Vin, and an output node 230 configured to provide a scaled output voltage Vout. The converter may be regulated, unregulated or any combination thereof, as described in reference to Fig. 4. Further repeated description is omitted for the sake of brevity.

In contrast to the voltage regulator 200-1 of Fig. 4, the first terminal of the first inductor 110 is connected to the output node of the converter 210, and the second terminal of the first inductor is connected to a voltage regulator output node 230. Accordingly, in this case, the equipotential nodes are the output node of the converter 210 and the voltage regulator output node 230.

The principle of operation remains the same. That is, by virtue of the first inductor 110 electrically coupled between the output node of the converter 210 and the voltage regulator output node 230, a current slope may be managed through the TLVR 10 during a load transient. Thus, a speed of the transient response of the entire voltage regulator 200-2 may be improved.

Although not depicted in either Fig. 4 or Fig. 5, the voltage regulators 200-1, 200-2 may each further comprise a TLVR controller configured to generate a control signal for controlling each phase voltage supply 40 of the TLVR 10. Accordingly, the TLVR 10 may be appropriately controlled, and may be used to manage the current slope during a transient event. In some cases, the TLVR controller is configured to generate the control signal based on the scaled output voltage Vout.

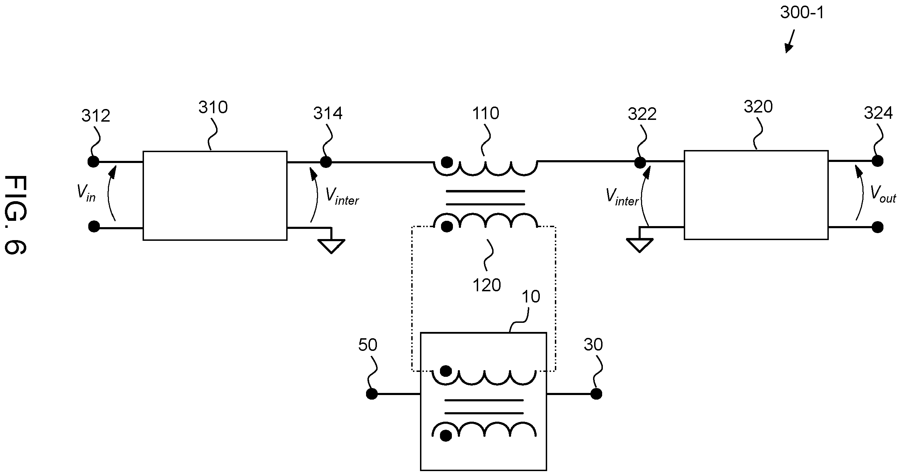

Referring now to Fig. 6, there is illustrated a circuit diagram of a multi-stage voltage regulator 300-1 incorporating the circuit 100 described in reference to Fig. 3, according to aspects of the present disclosure.

By way of brief explanation, typical multi-stage architectures are composed of two main converter stages, regulated stages and unregulated stages. Unregulated converters convert the output voltage with a fixed ratio and have high efficiency and high-power density. Regulated converters can regulate the output voltage to a specific value but have low efficiency and low power density.

In data centers, and specifically for converting bus voltage inputs (e.g., 48 V) to lower voltages (e.g., 1V), intermediate bus architecture is employed. This architecture involves dividing the power conversion process between two converters: an intermediate bus converter (IBC) and a point-of-load (PoL) converter. The IBC typically operates without regulation, offering high efficiency and power density. The PoL converter is typically a regulated, high-bandwidth converter, designed to regulate the PoL voltage to a fixed value. The IBC and PoL converters are connected in series.

Nevertheless, alternative architectures exist. For example, sigma architecture and hybrid sigma architecture provide an input series-output parallel (ISOP) connection between two converter stages (e.g., the IBC and PoL converter). Such a configuration may provide an improved efficiency.

Turning back to Fig. 6, the multi-stage voltage regulator 300-1 comprises a first stage converter 310 and a second stage converter 320. The depicted first stage converter 310 and the second stage converter 320 are connected in series.

The first stage converter 310 comprises a first stage input node 312 configured to receive an input voltage Vin, and a first stage output node 314 configured to provide a scaled intermediate voltage Vinter. The second stage converter 320 comprises a second stage input node 322 connected to the first stage output node 314 and configured to receive the scaled intermediate voltage, and a second stage output node 324 configured to provide a scaled output voltage Vout.

Similarly to the converters described in Figs. 4 and 5, the first stage converter 310 and the second stage converter 320 may be regulated, unregulated or any combination thereof.

Accordingly, a ratio between the scaled intermediate voltage provided by the first stage converter and the input voltage may be substantially fixed, while a ratio between the scaled output voltage provided by the second stage converter and the scaled intermediate voltage may be controllable. In other words, the first stage converter may be an unregulated converter, whilst the second stage converter may be regulated converter.

Equally, a ratio between the scaled intermediate voltage provided by the first stage converter and the input voltage may be controllable, while a ratio between the scaled output voltage provided by the second stage converter and the scaled intermediate voltage may be substantially fixed. That is, the first stage converter may be a regulated converter, whilst the second stage converter may be an unregulated converter.

The first inductor 110 of circuit 100 is connected between the first stage output node 314 and the second stage input node 316.

During typical operation of the multi-stage voltage regulator 300-1 the voltage drop across first inductor 110 is zero (neglecting parasitic resistance of the first inductor 110). Accordingly, the first inductor 110, and in turn the second inductor 120 and TLVR 10 will have negligible impact on the operation of the voltage regulator 300-1. However, when there is a load transient (i.e., the load connected to the second stage output node 324 requires more or less power), there will be a current surge across the first inductor 110. When this occurs, the TLVR 10 may be controlled to manage the current transient, so that the whole voltage regulator 300-1 responds in a quicker and more efficient fashion.

By way of further explanation, when considering the first and second series connected converter stages 310, 320, the output voltage of the first stage is equal to the input voltage of the second stage. The first inductor 110, is placed between these two stages. In steady state, neglecting the parasitic resistance of the first inductor 110, the DC voltage across the first inductor 110 is zero, and the current flowing through it is determined by the total output current.

The first inductor 110 is effectively electrically coupled, through the second inductor 120, with the magnetic components within the TLVR 10. Assuming that during a load transient, a positive (or negative) surge of current occurs through those magnetic components, it will affect the first inductor 110, creating a local positive or negative current boost. By managing the current slope through the first inductor 110 (by operation of the TLVR), it is possible to enhance the speed of the transient response of the entire voltage regulator 300-1. Note that, in steady state, the voltage across the first inductor 110 is negligible.

To this end, there may be provided a TLVR controller configured to generate a control signal for controlling each phase voltage supply 40 based on the scaled output voltage Vout on the second stage output node 324. The multi-stage voltage regulator 300-2 may also comprise a regulator controller configured to generate a control signal for the regulated converter (e.g., for the second stage controller 320, when the second stage converter 320 comprises a regulated converter). Said regulator controller may control the regulated controller to generate a target scaled output voltage.

The power source for the TLVR 10, provided by common voltage supply node 50, may derive from another section within the voltage regulator 300-1 or from an auxiliary voltage source. Furthermore, the power output by the TLVR, provided through common output node 30 may be provided to another section within the voltage regulator 300-1, or otherwise output. That is the TLVR 10 may operate independently.

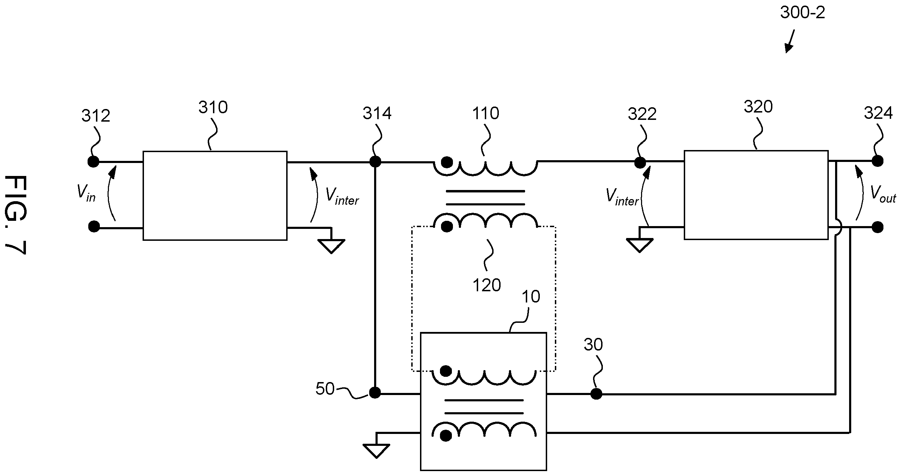

Nevertheless, as shown in Fig. 7, the common voltage supply node 50 of the TLVR 10 may be connected to the first stage output node 314. Accordingly, the voltage provided to each of the high side switch 42 of each phase voltage supply may be provided by the first stage converter 310.

Furthermore, the common output node 30 of the TLVR 10 may be connected to the second stage output node 324. Accordingly, the power output by the TLVR 10 may be transferred to the output of the voltage converter 300-2.

In a specific embodiment, the second stage converter 320 is an unregulated converter (i.e., facilitates a fixed ratio between the intermediate voltage Vinter and the output voltage Vout). The TLVR 10 may operate as a multiphase buck TLVR, and is linked to the output of the second stage converter. During load transient events that necessitate a voltage boost, a surge in current occurs within the phases of the multiphase buck TLVR 10. This current is then reflected onto the first inductor 110 and directed towards the input 322 of the second stage converter 320. Subsequently, this current is amplified by the fixed ratio of the stage and supplied to the output node 324. By managing specific parameters, this configuration can enhance transient response without the need for a high-bandwidth multiphase buck converter.

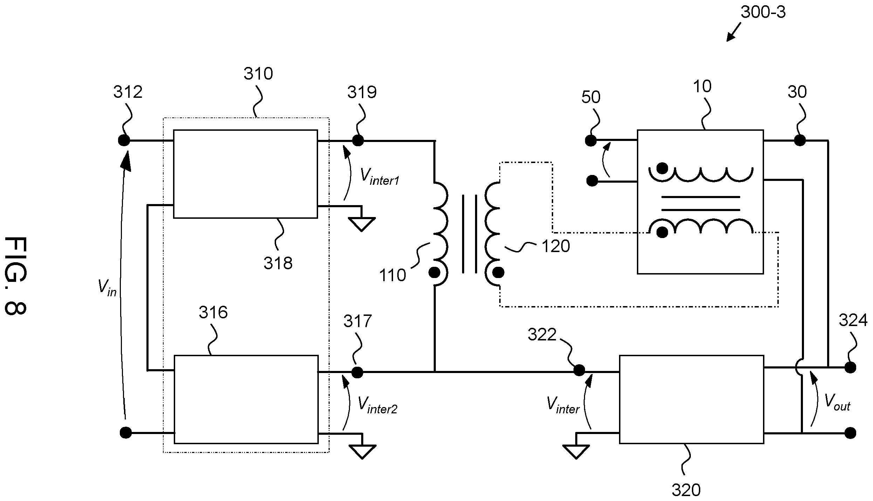

Fig. 8 depicts a circuit diagram of a multi-stage voltage regulator with a first stage converter comprising an unregulated converter and a regulated converter, according to aspects of the present disclosure.

More specifically, the first stage converter 310 is a sigma architecture-based voltage converter comprising at least one regulated converter 316 and at least one unregulated converter 318. In this case, only a single regulated converter 316 and unregulated converter 318 are depicted, but more may be provided. As a result, the regulated converter(s) 318 and the unregulated converter(s) 316 are each configured to receive a respective part of the input voltage Vin, and provide a respective part of the scaled intermediate voltage Vinter. In other words, regulated and unregulated converters of the first stage converter 310 are ISOP connected.

A second stage converter 320 is also provided, and is connected in series with the first stage converter 310. That is, the output node of the unregulated converter(s) 319 and the output node of the regulated converter(s) 317 are each connected to the input node of the second stage converter 320. In some embodiments, the second stage converter 320 is an unregulated converter, but the invention is not restricted as such.

As stated before, for transient response to be improved, the first inductor 110 may be connected anywhere where when its input node and output node are equipotential nodes (i.e., where the input voltage and the output voltage are of substantially the same amount on average in steady state).

Accordingly, in the depicted case, the output node 319 of the unregulated converter(s) 318 of the first stage converter 310 is connected to a first terminal of the first inductor 110, and an output node 317 the regulated converter(s) 316 of the first stage converter 310 are connected to a second terminal of the first inductor 110. In this case, the second terminal of the first inductor 110 is connected to the second stage input node 322. In other words, the first inductor 110 is connected across the output nodes 317, 319 of the first stage converter 310.

Finally, the TLVR 10 is inductively coupled to the first inductor 110, via the second inductor 120 as described above. In the present case, the common output node 30 of the TLVR 10 is connected to the second stage output node 324. Of course, it should be appreciated that this is optional. Equally, the common voltage supply node 50 may be connected to a part of the multi-stage voltage regulator 300-3, such as the output node 319 of the unregulated converter(s) 318.

Given the ISOP connection between converters as depicted in Fig. 8, the provision of the first inductor 110 and coupled TLVR 10 across the output of the unregulated and the regulated stages will not affect the steady state operation of the multi-stage voltage regulator 300-3. However, during transient events, the TLVR 10 may receive more current from the unregulated converter(s) 318 than the regulated converter(s) 316, increasing the entire converter performance.

That is, the primary advantage of the provision of the TLVR 10 coupled to the first inductor 110 provided across the output of the converters of the first stage converter 310, is to improve transient response by bolstering the performance of the unregulated converter(s) 318 (and second stage converter 320, if it is an unregulated converter). In essence, when a transient event occurs, the boosted current flows into the unregulated converters, resembling a hardware feed-forward approach, enhancing the transient performance of the whole voltage regulator 300-3.

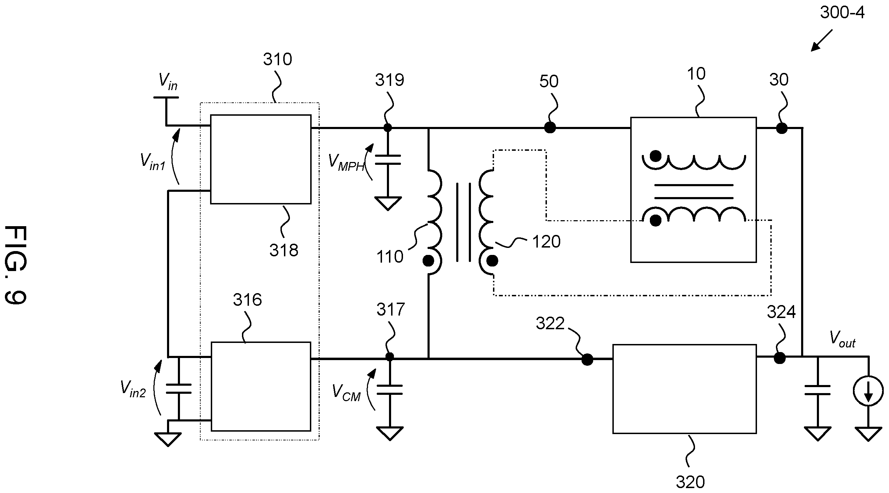

One potential application for the multi-stage converter of Fig. 8 is in the conversion of power from 48V to 1V. The specific implementation for this is presented in Fig. 9.

In this scenario, the first stage converter 310 may take various forms, including unregulated, semi-regulated, or fully regulated configurations. As depicted, an effective choice for this setup is to employ a semi-regulated hybrid switched capacitor sigma converter, which comprises a hybrid switched capacitor as the unregulated converter 318, and a buck converter as the regulated converter 316. As shown, these are connected in an ISOP format, with the unregulated converter 318 and the regulated converter 316 receiving different respective parts of an input voltage Vin. This may ensure output regulation with both high efficiency and high power density.

The second stage converter may also take various forms. As depicted, an effective choice is as a current multiplier, such as an unregulated hybrid switched capacitor converter acting as DCX converter. This may provide both high power density and high current capabilities.

The unregulated converter 318 of the first stage converter 310 is powered by a portion of Vin and is linked at the output to the common voltage supply node 50 of the TLVR 10. The TLVR 10 acts as a multiphase buck. The second inductor 120 of the TLVR loop is inductively coupled to the first inductor 110, the first terminal of which is linked to the output of the unregulated converter 318.

The regulated converter 316 of the first stage converter 310 is also supplied by a portion of Vin and is connected at the output to the second terminal of the first inductor 110. The output of the regulated converter is also connected to the second stage converter 320. The second stage converter 320 is connected at the output to a point of load, as is the common output node of the TLVR 10.

During steady-state conditions, the first inductor 110 may, for some purposes, be considered a short circuit (neglecting parasitic resistance of the first inductor 110).

In this case, the output voltage Vout is dictated by the TLVR 10, while the regulated converter 316 regulates the Vcm. The primary objective of regulation of the regulated converter 316 is to manage the power distribution between the TLVR 10 and the second stage converter 320. Given that the second stage converter 320 (in the form of current multipliers) is more efficient and possesses a higher current capability, it is advantageous to direct the majority of power through the second stage converter 320. To achieve this, the current output of the regulated converter 316 is compared to a weighted value of the total output current of the TLVR 10 in order to determine control of the regulated converter 316. At the same time, control of the TLVR 10 is determined based on a comparison of the output voltage Vout, and a reference/target voltage. In other words, to control operation of the multi-stage voltage regulator, the voltage Vout on the output node 324 of the second stage converter 320 is sensed. The upper switches 42 and the lower switches 44 of the phase voltage supplies 40 of the TLVR 10 are then controlled based on the sensed voltage. In particular, if the sensed voltage differs from a reference voltage, then control of the switches may be altered (e.g., a duty cycle, frequency, etc. of switching may be modified) so as to align the sensed voltage with the reference voltage.

Meanwhile, a first current flowing through the common output node 30 of the TLVR 10 is sensed. A second current flowing through the output node 317 of the regulated converter 316 of the first stage converter is also sensed. The regulated converter 316 of the first stage converter is then controlled based on the sensed first current and the sensed second current. That is, the first sensed current and the second sensed current and compared, and operation of the regulated controller modified based on the comparison. Precise details of the control will depend on the particular regulated controller that is utilized.

Accordingly, during an increase in load current, the output voltage Vout drops, causing an increase in current through the common output node 30 of the TLVR 10. This current change is reflected in the first inductor 110, contributing to a decrease in the voltage output by the unregulated converter 318 Vmph. Simultaneously, a controller of the regulated converter 316 senses the current through the common output node 30 of the TLVR 10, and the current flowing through the output node 317 of the regulated converter 316. As a result, Vin2 decreases. The contribution of the regulated converter 316, together with the first inductor 110, raises Vcm. Given that Vin is a fixed voltage node, the voltage Vin1 into the unregulated converter 318 increases. Hence, both unregulated converter 318 and second stage converter 320 experience an elevated input voltage and a reduced output voltage. This implies that a current is driven by the voltage differential.

To be clear, this operation is enabled by the introduction of the first inductor 110 coupled to the second inductor 120 of the TLVR loop, which influences the voltage on the output node of the unregulated converter 318, and the second stage converter 320 during transient events, thereby enhancing their performance.

Furthermore, whilst the above control scheme has been described in order to facilitate efficient power splitting between the regulated converter 316 and the unregulated converters 318, 320, alternative control schemes may be implemented. That is, in this case the goal is to achieve power splitting between the regulated converter 316 and the unregulated converters 318, 320. However, different control schemes may be implemented to achieve different goals.

To summarize, this topology of the multi-stage voltage regulator 300-4 and the above-described type of control enables fast transient response, high efficiency, and increased current capability when compared to a single-stage multiphase buck converter. This development aligns with the growing demand for higher power requirements in data centers.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

In addition to the above described examples, the following examples are disclosed.

Example 1 is a circuit, comprising:
a first inductor connected between a first equipotential node and a second equipotential node, wherein the first equipotential node and the second equipotential node are provided with a substantially similar voltage;
a multi-phase trans-inductance voltage regulator, TLVR, comprising:
   a second inductor inductively coupled to the first inductor;
   a plurality of primary windings connected in series with the second inductor; and
   a plurality of secondary windings, each one of the plurality of secondary windings inductively coupled to a respective one of the plurality of primary windings, and each secondary winding provided between a respective phase input node and a common output node.

Example 2 is the circuit of example 1, wherein each of the phase input nodes are connected to a respective phase voltage supply.

Example 3 is the circuit of example 2, wherein each phase voltage supply comprises an upper switch connected between a common voltage supply node and the phase input node, and a lower switch connected between the phase input node and a fixed reference potential.

Example 4 is the circuit of example 3, wherein the common voltage supply node is connected to a first terminal of the first inductor.

Example 5 is the circuit of any of examples 2-4, further comprising a TLVR controller configured to generate a control signal for controlling each phase voltage supply.

Example 6 is the circuit of any of examples 1-5, wherein the plurality of primary windings and the second inductor are connected in series between a fixed reference potential.

Example 7 is the circuit of any of examples 1-6, wherein the TLVR further comprises a transient inductor connected in series with the plurality of primary windings and the second inductor.

Example 8 is a voltage regulator, comprising:
a converter comprising an input node configured to receive an input voltage, and an output node configured to provide a scaled output voltage; and
the circuit of any of examples 1-7, wherein either:
   a first terminal of the first inductor is connected to a voltage regulator input node, and a second terminal of the first inductor is connected to the input node of the converter; or
   a first terminal of the first inductor is connected to the output node of the converter, and a second terminal of the first inductor is connected to a voltage regulator output node.

Example 9 is the voltage regulator of example 8, wherein the common output node of the TLVR is connected to a voltage regulator output node.

Example 10 is the voltage regulator of example 8 or 9, wherein each of the phase input nodes are connected to a respective phase voltage supply, each phase voltage supply comprising an upper switch connected between a common voltage supply node and the phase input node, and a lower switch connected between the phase input node and a fixed reference potential. The common voltage supply node is connected to voltage regulator input node.

Example 11 is the voltage regulator of example 10, wherein the circuit further comprises a TLVR controller configured to generate a control signal for controlling each phase voltage supply. The TLVR controller is configured to generate the control signal based on the scaled output voltage.

Example 12 is a multi-stage voltage regulator, comprising:
a first stage converter comprising a first stage input node configured to receive an input voltage, and a first stage output node configured to provide a scaled intermediate voltage;
a second stage converter comprising a second stage input node connected to the first stage output node and configured to receive the scaled intermediate voltage, and a second stage output node configured to provide a scaled output voltage,
wherein either: a ratio between the scaled intermediate voltage provided by the first stage converter and the input voltage is substantially fixed, and a ratio between the scaled output voltage provided by the second stage converter and the scaled intermediate voltage is controllable; or a ratio between the scaled intermediate voltage provided by the first stage converter and the input voltage is controllable, and a ratio between the scaled output voltage provided by the second stage converter and the scaled intermediate voltage is substantially fixed; and
the circuit of any of examples 1-7, wherein the first inductor is between the first stage output node and the second stage input node.

Example 13 is the multi-stage voltage regulator of example 12, wherein the common output node of the TLVR is connected to the second stage output node.

Example 14 is the multi-stage voltage regulator of example 12 or 13, wherein each of the phase input nodes are connected to a respective phase voltage supply, each phase voltage supply comprising an upper switch connected between a common voltage supply node and the phase input node, and a lower switch connected between the phase input node and a fixed reference potential. The common voltage supply node is connected to the first stage output node.

Example 15 is the multi-stage voltage regulator of example 14, wherein the circuit further comprises a TLVR controller configured to generate a control signal for controlling each phase voltage supply, wherein the TLVR controller is configured to generate the control signal based on the scaled output voltage.

Example 16 is the multi-stage voltage regulator of any of examples 12-15, further comprising a regulator controller configured to generate a control signal for controlling the second stage converter to generate a target scaled output voltage, or for controlling the first stage converter to generate a target scaled intermediate voltage.

Example 17 is the multi-stage voltage regulator of any of examples 12-16, wherein the first stage converter is a sigma architecture-based voltage converter comprising at least one regulated converter and at least one unregulated converter, wherein each of the regulated converters and each of the unregulated converters are configured to receive a respective part of the input voltage, and provide a respective part of the scaled intermediate voltage.

Example 18 is the multi-stage voltage regulator of example 17, wherein an output node of each of the unregulated converters of the first stage are connected to a first terminal of the first inductor, and an output node of each of the regulated converters of the first stage are connected to a second terminal of the first inductor, and wherein the second terminal of the first inductor is connected to the second stage input node.

Example 19 is the multi-stage voltage regulator of example 18, wherein each of the phase input nodes are connected to a respective phase voltage supply, each phase voltage supply comprising an upper switch connected between a common voltage supply node and the phase input node, and a lower switch connected between the phase input node and a fixed reference potential. The common voltage supply node is connected to output node of the unregulated converters.

Example 20 is the multi-stage voltage regulator of any of examples 17-19, further comprising a regulator controller configured to generate a control signal for controlling the one of more regulated converters of the first stage converter.

Example 21 is the multi-stage voltage regulator of example 20, wherein the regulator controller is configured to generate the control signal for each regulated converter based on a current flowing between the respective regulated converter and the second stage input node, and a current flowing between the common output node of the TLVR and the second stage output node.

Example 22 is the multi-stage voltage regulator of any of examples 15-19, further comprising a TLVR controller configured to generate a control signal for controlling each phase voltage supply, and wherein the TLVR controller is configured to generate the control signal based on the voltage on the second stage output node and a reference voltage.

Example 23 is the multi-stage voltage regulator of any of examples 15-22, wherein the at least one unregulated converter comprises a hybrid switched capacitor, the at least one regulated converter comprises a buck converter, and the second stage converter comprises a current multiplier.

Example 24 is a multi-stage voltage regulator, comprising:
a first stage converter comprising:
   an unregulated converter comprising an input node configured to receive a first part of an input voltage, and an output node configured to provide a first scaled intermediate voltage, a ratio between the first scaled intermediate voltage and the first part of the input voltage being substantially fixed;
   a regulated converter comprising an input node configured to receive a second part of the input voltage, and an output node configured to provide a second scaled intermediate voltage, a ratio between the second scaled intermediate voltage and the second part of the input voltage being controllable, the output node connected to a common node;
a first inductor comprising a first terminal connected to the output node of the unregulated converter of the first stage converter, and a second terminal connected to the common node;
a second stage converter comprising an input node configured to receive a voltage on the common node, and an output node configured to provide a scaled output voltage, a ratio between the voltage on the common node and the scaled output voltage being substantially fixed;
a multi-phase trans-inductance voltage regulator, TLVR, comprising:
   a second inductor inductively coupled to the first inductor;
   a plurality of primary windings connected in series with the second inductor;
   a plurality of secondary windings, each one of the plurality of secondary windings inductively coupled to a respective one of the plurality of primary windings, and each secondary winding provided between a respective phase input node and a common output node, wherein the common output node is connected to the output node of second stage converter, and
   a plurality of phase voltage supplies, each phase voltage supply connected to a respective phase input node and comprising an upper switch connected between the first terminal of the first inductor and the phase input node, and a lower switch connected between the phase input node and a fixed reference potential.

Example 25 is a method for controlling operation of the multi-stage voltage regulator of example 24, the method comprising:
sensing a voltage on the output node of the second stage converter;
controlling the upper switches and the lower switches of the phase voltage supplies of the TLVR based on the sensed voltage;
sensing a first current flowing through the common output node of the TLVR;
sensing a second current flowing through the output node of the regulated converter of the first stage converter; and
controlling the regulated converter of the first stage converter based on the sensed first current and the sensed second current.

## Claims

1. A circuit (100), comprising:
a first inductor (110) connected between a first equipotential node (130) and a second equipotential node (140), wherein the first equipotential node and the second equipotential node are provided with a substantially similar voltage;
a multi-phase trans-inductance voltage regulator, TLVR, (10) comprising:
a second inductor (120) inductively coupled to the first inductor;
a plurality of primary windings (12) connected in series with the second inductor; and
a plurality of secondary windings (14), each one of the plurality of secondary windings inductively coupled to a respective one of the plurality of primary windings, and each secondary winding provided between a respective phase input node (20) and a common output node (30).

2. A voltage regulator (200), comprising:
a converter (210) comprising an input node configured to receive an input voltage (Vin), and an output node configured to provide a scaled output voltage (Vout); and
the circuit (100) of claim 1, wherein either:
a first terminal of the first inductor (110) is connected to a voltage regulator input node (220), and a second terminal of the first inductor is connected to the input node of the converter; or
a first terminal of the first inductor is connected to the output node of the converter, and a second terminal of the first inductor is connected to a voltage regulator output node (230).

3. The voltage regulator of claim 2, wherein the common output node (30) of the TLVR (10) is connected to a voltage regulator output node.

4. The voltage regulator of claim 2 or 3, wherein each of the phase input nodes (20) are connected to a respective phase voltage supply (40), each phase voltage supply comprising an upper switch (42) connected between a common voltage supply node (50) and the phase input node, and a lower switch (44) connected between the phase input node and a fixed reference potential, and
wherein the common voltage supply node is connected to voltage regulator input node (220).

5. The voltage regulator of claim 4, wherein the circuit (100) further comprises a TLVR controller configured to generate a control signal for controlling each phase voltage supply (40), wherein the TLVR controller is configured to generate the control signal based on the scaled output voltage (Vout).

6. A multi-stage voltage regulator (300), comprising:
a first stage converter (310) comprising a first stage input node (312) configured to receive an input voltage (Vin), and a first stage output node (314) configured to provide a scaled intermediate voltage (Vinter);
a second stage converter (320) comprising a second stage input node (322) connected to the first stage output node and configured to receive the scaled intermediate voltage, and a second stage output node (324) configured to provide a scaled output voltage (Vout),
wherein either: a ratio between the scaled intermediate voltage provided by the first stage converter and the input voltage is substantially fixed, and a ratio between the scaled output voltage provided by the second stage converter and the scaled intermediate voltage is controllable; or a ratio between the scaled intermediate voltage provided by the first stage converter and the input voltage is controllable, and a ratio between the scaled output voltage provided by the second stage converter and the scaled intermediate voltage is substantially fixed; and
the circuit (100) of claim 1, wherein the first inductor (110) is between the first stage output node and the second stage input node.

7. The multi-stage voltage regulator of claim 6, wherein the common output node (30) of the TLVR (10) is connected to the second stage output node (324).

8. The multi-stage voltage regulator of claim 6 or 7, wherein each of the phase input nodes (20) are connected to a respective phase voltage supply (40), each phase voltage supply comprising an upper switch (42) connected between a common voltage supply node (50) and the phase input node, and a lower switch (44) connected between the phase input node and a fixed reference potential, and
wherein the common voltage supply node is connected to the first stage output node (314).

9. The multi-stage voltage regulator of claim 8, wherein the circuit (100) further comprises a TLVR controller configured to generate a control signal for controlling each phase voltage supply (40), wherein the TLVR controller is configured to generate the control signal based on the scaled output voltage (Vout).

10. The multi-stage voltage regulator of any of claims 6-9, further comprising a regulator controller configured to generate a control signal for controlling the second stage converter (320) to generate a target scaled output voltage (Vout), or for controlling the first stage converter (310) to generate a target scaled intermediate voltage (Vinter).

11. The multi-stage voltage regulator of any of claims 6-10, wherein the first stage converter (310) is a sigma architecture-based voltage converter comprising at least one regulated converter (316) and at least one unregulated converter (318), wherein each of the regulated converters and each of the unregulated converters are configured to receive a respective part of the input voltage (Vin), and provide a respective part of the scaled intermediate voltage (Vinter).

12. The multi-stage voltage regulator of claim 11, wherein an output node (319) of each of the unregulated converters (318) of the first stage are connected to a first terminal of the first inductor (110), and an output node (317) of each of the regulated converters (316) of the first stage are connected to a second terminal of the first inductor, and wherein the second terminal of the first inductor is connected to the second stage input node (322).

13. The multi-stage voltage regulator of claim 12, wherein each of the phase input nodes (20) are connected to a respective phase voltage supply (40), each phase voltage supply comprising an upper switch (42) connected between a common voltage supply node (50) and the phase input node, and a lower switch (44) connected between the phase input node and a fixed reference potential, and
wherein the common voltage supply node is connected to output node (319) of the unregulated converters (318).

14. A multi-stage voltage regulator (300-3, 300-4), comprising:
a first stage converter (310) comprising:
an unregulated converter (318) comprising an input node configured to receive a first part of an input voltage (Vin1), and an output node (319) configured to provide a first scaled intermediate voltage (Vinter1), a ratio between the first scaled intermediate voltage and the first part of the input voltage being substantially fixed;
a regulated converter (316) comprising an input node configured to receive a second part of the input voltage (Vin2), and an output node (317) configured to provide a second scaled intermediate voltage (Vinter2), a ratio between the second scaled intermediate voltage and the second part of the input voltage being controllable, the output node connected to a common node;
a first inductor (110) comprising a first terminal connected to the output node of the unregulated converter of the first stage converter, and a second terminal connected to the common node;
a second stage converter (320) comprising an input node (322) configured to receive a voltage (Vinter) on the common node, and an output node (324) configured to provide a scaled output voltage (Vout), a ratio between the voltage on the common node and the scaled output voltage being substantially fixed;
a multi-phase trans-inductance voltage regulator, TLVR, (10) comprising:
a second inductor (120) inductively coupled to the first inductor;
a plurality of primary windings (12) connected in series with the second inductor;
a plurality of secondary windings (14), each one of the plurality of secondary windings inductively coupled to a respective one of the plurality of primary windings, and each secondary winding provided between a respective phase input node (20) and a common output node (30), wherein the common output node is connected to the output node of second stage converter, and
a plurality of phase voltage supplies (40), each phase voltage supply connected to a respective phase input node and comprising an upper switch (42) connected between the first terminal (50) of the first inductor and the phase input node, and a lower switch (44) connected between the phase input node and a fixed reference potential.

15. A method for controlling operation of the multi-stage voltage regulator (300-3, 300-4) of claim 14, the method comprising:
sensing a voltage on the output node (324) of the second stage converter (320);
controlling the upper switches (42) and the lower switches (44) of the phase voltage supplies (44) of the TLVR (10) based on the sensed voltage;
sensing a first current flowing through the common output node (30) of the TLVR;
sensing a second current flowing through the output node (317) of the regulated converter (316) of the first stage converter (310); and
controlling the regulated converter of the first stage converter based on the sensed first current and the sensed second current.
